Europäisches Patentamt

European Patent Office

Office européen des brevets

(11) Publication number: **0 065 426**
**B1**

## EUROPEAN PATENT SPECIFICATION

(45) Date of publication of patent specification: **06.11.85**

(21) Application number: **82302590.3**

(22) Date of filing: **20.05.82**

(51) Int. Cl.⁴: **B 23 D 37/00, F 01 C 1/02, F 04 C 18/02, B 21 D 11/06**

(54) Scroll manufacturing tool.

(30) Priority: **20.05.81 JP 76139/81**

(43) Date of publication of application:
**24.11.82 Bulletin 82/47**

(45) Publication of the grant of the patent:
**06.11.85 Bulletin 85/45**

(84) Designated Contracting States:
**DE FR GB IT SE**

(56) References cited:
**EP-A-0 012 615**
**US-A- 801 182**
**US-A-3 994 635**

(73) Proprietor: **SANDEN CORPORATION**
**20 Kotobuki-cho**
**Isesaki-shi Gunma-ken (JP)**

(72) Inventor: **Fukushima, Eiji**
**1755, Haranogou Fujimi-mura**
**Seta-gun Gunma-ken (JP)**
Inventor: **Fukuhara, Seiichi**
**470, Namie-machi Takasaki-shi**
**Gunma-ken (JP)**
Inventor: **Hiraga, Masaharu**
**8-34, Honjo 4-chome Honjo-shi**
**Saitama-ken (JP)**

(74) Representative: **Pritchard, Colin Hubert et al**
**Mathys & Squire 10 Fleet Street**
**London EC4Y 1AY (GB)**

## Description

This invention relates to a scroll type fluid displacement apparatus and more particularly, to a tool for manufacturing the scroll.

Scroll type fluid displacement apparatus are well known in the prior art. For example, US—A—801,182 discloses a device including two scrolls, each having a circular end plate and a spiroidal or involute spiral element. Both scrolls are maintained angularly and radially offset so that both spiral elements interfit to make a plurality of line contacts between their spiral curved surfaces to thereby seal off and define at least one pair of fluid pockets. The relative orbital motion of the scrolls shifts the line contacts along the spiral curved surfaces to change the volume of the fluid pockets. The volume of the fluid pockets increases or decreases dependent on the direction of the orbital motion. Therefore, scroll type fluid displacement apparatus are applicable to compress, expand or pump fluids.

In such apparatus, each sealed off fluid pocket is defined by the line contacts between interfitting spiral elements and by the axial contacts between the axial end surface of each spiral element and the inner end surface of the end plate of the other scroll. The volume of the pocket is thereby defined by both line contacts and axial contacts.

The scroll is generally formed from a single piece of metal by machining process, such as milling. However, milling process consumes a great deal of time and energy and, also produces large quantities of waste metal. If the scroll member is formed by casting or forging, and if axial dimension of the spiral element is to be made relatively long to obtain a large volume or higher capacity, the draft angle of mold must be made large. After forming in such a mold, the amount of machining of the spiral element to obtain the uniform wall thickness increases with the result that relatively large quantities of waste metal are produced. Such a manufacturing method also consumes a great detail of time and energy and makes it difficult to attain high accuracy of the wall dimension of the spiral element.

In order to avoid these disadvantages, US—A—3,994,635 discloses a scroll consisting of two pieces. The scroll is formed of a separate end plate having an involutely configured groove in the one side surface thereof and a separate spiral element which is seated in the groove. However, in this construction, the process for seating the spiral element in the groove is intricate. Also, after seating the spiral element in the groove, finishing of surfaces of the end plate and the spiral element will be intricate and difficult. Furthermore, the reliability of the two-piece scroll is inferior to the single-piece scroll.

It is a primary object of this invention to provide an improvement in a manufacturing tool for finishing a preformed single-piece scroll which is used in a scroll type fluid displacement apparatus.

It is another object of this invention to provide a manufacturing tool for broaching a spiral element of a scroll to provide a finished single-piece scroll which can simplify the finishing process.

According to this invention, there is provided a manufacturing tool for broaching an involute wrap of a preformed scroll to provide a finished scroll for use in a scroll type fluid displacement apparatus, characterized by a working member which includes a first involute element having a first tooth means extending along an inner side surface of an axial end portion thereof, and an end plate from one side surface of which said first involute element extends, the end plate being formed with a plurality of penetrating holes, a second involute element which can be interfitted with said first involute element to leave a radial gap therebetween, said second involute element having a second tooth means extending along an inner side surface of an axial end portion thereof so as to face said first tooth means and a plurality of pins projecting from the axial end surface thereof which, in use, faces said end plate, said pins being, in use, loosely fitted in said holes of said end plate, and an adjusting member which is rotatably mounted on the other side surface of said end plate and is fixedly connected to the axial end of said pins, thereby to enable adjustment of the width of the gap between said first and second involute elements, into which gap said involute wrap is urged so that both side surfaces thereof are finished by said teeth.

Suitably, the working member includes a supporting member affixed to the other side surface of the end plate, and the adjusting member is rotatably fitted to the supporting member.

According to an embodiment of this invention, the supporting member is a shaft extending on the central axis of the first involute element, and the adjusting member is rotatably mounted on the shaft. Suitably, each of the holes has an arcuate form and extends about the central axis of the first involute element.

This invention will now be described, by way of example, with reference to the accompanying drawings, in which:

Fig. 1 is a perspective view of a scroll for use in a scroll type fluid displacement apparatus;

Fig. 2 is a view for illustrating an involute of a circle;

Fig. 3 is a view for illustrating two involutes forming the outer and inner curved surfaces of the involute wrap of a scroll;

Fig. 4 is a view for illustrating the pitch of an involute;

Fig. 5 is an exploded perspective view of a manufacturing tool of an embodiment according to the present invention;

Fig. 6 is an exploded perspective view of the manufacturing tool as viewed from opposite side of Fig. 5;

Fig. 7 is a perspective view of the manufacturing tool in Fig. 5; and

Fig. 8 is a sectional view of the manufacturing tool under a condition used for finishing a preformed scroll.

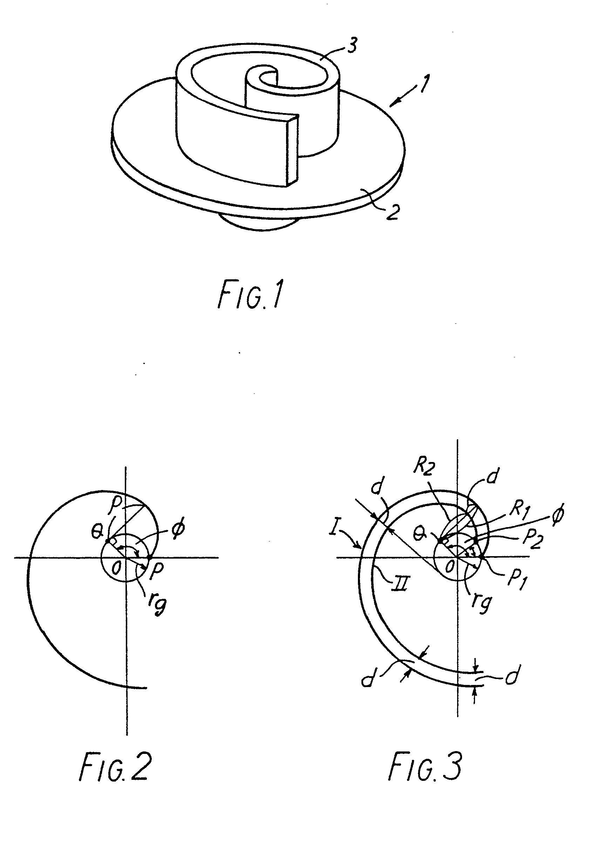

Before the embodiment of the invention is described, a basic design of a scroll for use in a scroll type fluid displacement apparatus is described in connection with Figs. 1—4.

Referring to Fig. 1, a scroll 1 includes a circular end plate 2 and a wrap or involute spiral element 3 affixed to and extending from one side surface of end plate. A scroll type fluid displacement apparatus includes a pair of such scrolls, both of which are maintained angularly and radially offset so that they interfit and form a plurality of line contacts and axial contact to define at least one pair of sealed off fluid pockets.

The spiral contour of spiral element 3 is generally an involute of a circle. That is, the spiral contour of a side wall of spiral element 3 consists of a locus which is drawn by an end of an inextensible string from a point P on the involute generating circle at a time when the inextensible string wound on the involute generating circle is unwound. The radius of curvature of the involute, i.e., the length p along a tangent line at a point Q on the involute generating circle to the involute, is given by $\rho = \phi \cdot rg$, where $\phi$ is an involute angle and rg is a radius of the involute generating circle. Referring to Fig. 3, the outer and inner spiral contours of spiral element 3 are two similar involutes I and II, involute I starting from a point $P_1$ on the involute generating circle while involute II starting from a point $P_2$ on the involute generating circle which is angularly offset by $\beta$ from point $P_1$. Since, a length $R_1$ along a tangent line at a point Q on the involute generating circle to involute I is given by $R_1 = \phi \cdot rg$ and a length $R_2$ along the tangent line from the point Q to involute II is given by $R_2 = (\phi - \beta) \cdot rg$. The thickness of the spiral element or the distance d between the both involutes I and II is, therefore, given by $d = R_1 - R_2 = \phi \cdot rg - (\phi - \beta) \cdot rg = \beta \cdot rg$. This equation also teaches a nature of two involutes I and II obtained from an involute generating circle that the distance between both involutes I and II is adjustable by changing the offset angle $\beta$ of starting points $P_1$ and $P_2$ of two involutes I and II, the adjusted distance being uniform in no relation to the involute angle.

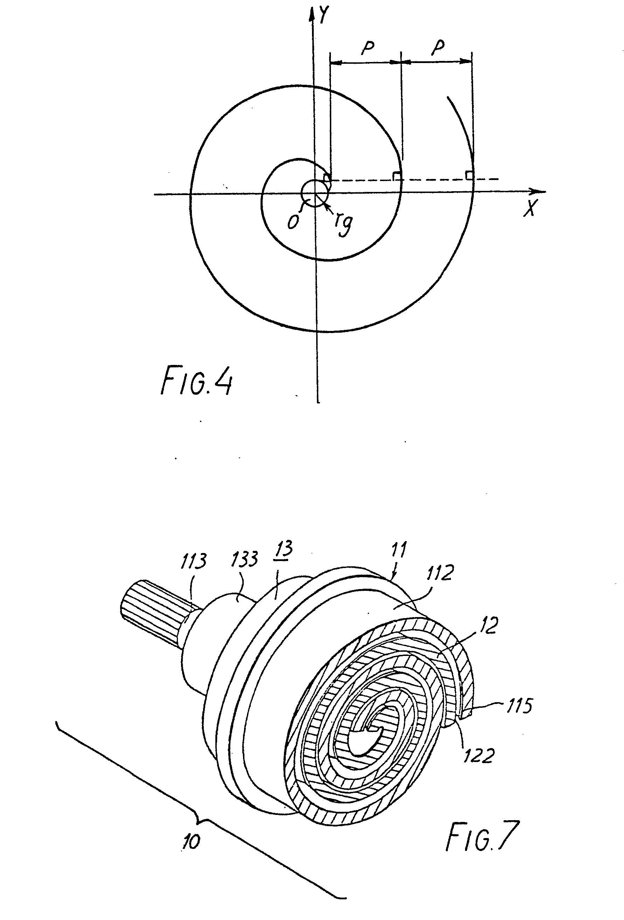

Fig. 4 illustrates another nature of the involute, that is, individual distances between adjacent intersections of the involute and a tangent line of the involute generating circle are equal to one another. Therefore, the involute has a constant pitch P which is defined by $P = 2\pi \cdot rg$.

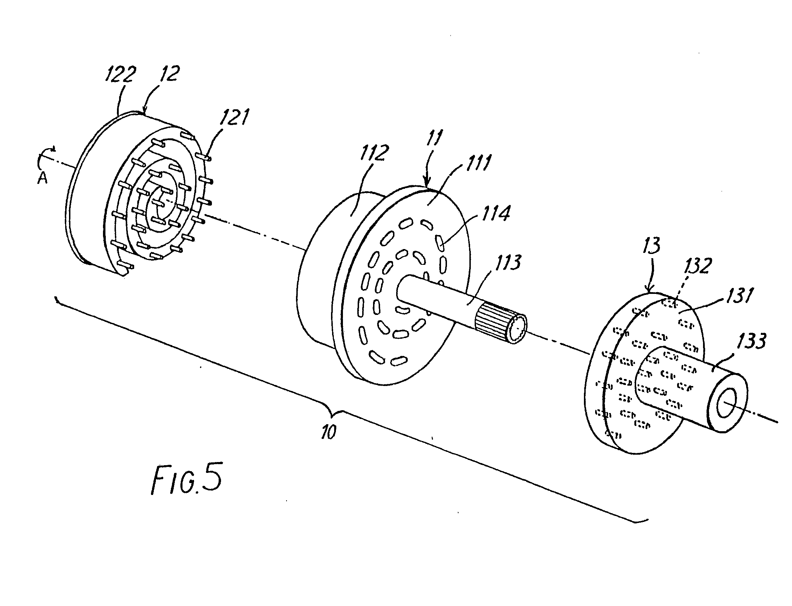

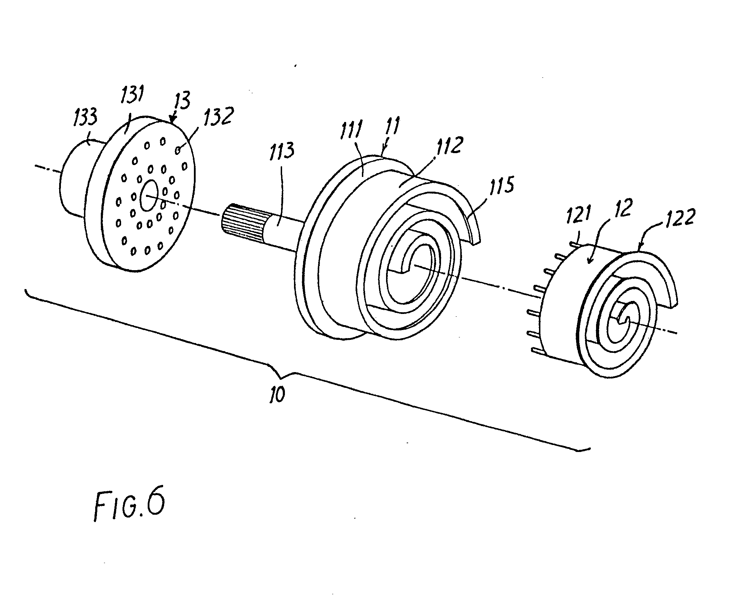

Referring to Figs. 5, 6 and 7, a manufacturing tool 10 to form a scroll in accordance with the present invention includes a working member 11 having a first involute element 112, a second involute element 12 to be interfitted with first involute element 112 and having a plurality of pins 121 projecting from an axial end surface thereof, and an adjusting plate 13.

Working member 11 includes an end plate 111, first involute element 112 affixed to and extending from one side surface of end plate 111, and a shaft 113 extending on the central axis of involute element 112 and from the other side surface of end plate 111 opposite involute element 112. An inner sidewall, or inner edge of the axial end portion of first involute element 112 is provided with a tooth 115 extending along the involute. Tooth 115 is for finishing the spiral element of a preformed scroll, as described in detail hereinafter. End plate 111 is formed with a plurality of penetrated arcuate holes 114 which are arranged along the outer side wall portion of first involute element 112 so that pins 121 of second involute element 12 may be fitted through holes 114 at a time when first and second involute elements 112 and 12 are made to interfit. The outer and inner side walls of each arcuate hole 114 are concentric with one another and have a center on the central axis of first involute element 112. The length of the arc of each arcuate hole 114 is selected to limit relative rotation of working element 11 and second involute element 12 mounted therein within a predetermined small angular extent by engagement of each pin 121 and each arcuate hole 114. An outer side surface, or outer edge of the other axial end portion of second involute element 12 is also provided with a tooth 122 extending along the involute, for finishing the spiral element of a preformed scroll. Therefore, when second involute element 12 is mounted in working member 11, teeth 115 and 122 generally face one another. Adjusting plate 13 includes a circular plate 131 having a central hole for receiving shaft 113 of working member 11. Circular plate 131 is also formed with a plurality of holes 132 in its one side surface for receiving the axial end portion of pins 121 of second involute element 12. Adjusting plate 13 also has a tubular shaft 133. Tubular shaft 133 is affixed to the central portion of the other side surface of end plate 131 so that the central hole of end plate 131 connects with the axial penetrating hole of tubular shaft 133 for supporting shaft 113 of working member 11. adjusting plate 13 is mounted on shaft 113 by inserting shaft 113 through the central hole of end plate 131 and the penetrating hole of tubular shaft 133 in a condition that the center of tubular shaft 133 coincides with the center of shaft 113 of working member 11. The axial ends of pins 121 projecting through arcuate holes 114 are fitted into holes 132 and fixedly connected to adjusting plate 13.

The spiral curve of second involute element 12 is formed similar to that of first involute element 112, so that both involute elements 112 and 12 can be interfitted with a radial gap therebetween which is defined between the facing side walls of involute elements. It will be noted from the natures of the involute as described above that the width of the gap does not change but is constant along involute elements 112 and 12. In addition, the width can be adjusted by relative rotation of both involute elements 112 and 12, as will be noted from teaching of the above-described equation $d = \beta \cdot rg$.

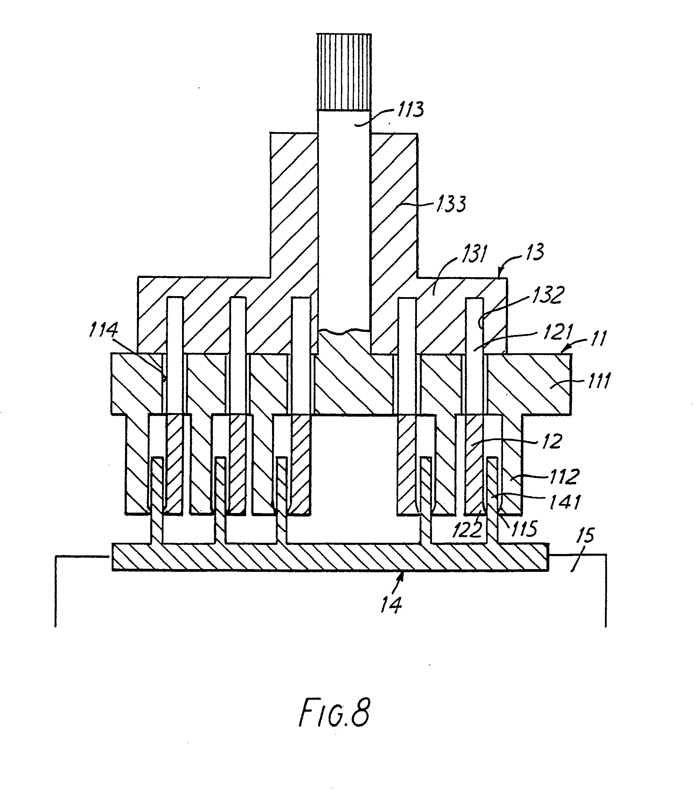

When the tool is assembled, as shown in Fig. 7, by mounting second involute 12 and adjusting plate 13 onto working member 11, each pin 121 of second involute element 12 passes through each corresponding arcuate hole 114 of end plate 111 and is fitted in hole 132 of adjusting plate 13, as described above. Therefore, second involute element 12 can be moved along each arcuate hole 114 by rotation of adjusting plate 13, so that the gap width between both involute elements 112 and 12 can be adjusted by rotation of adjusting plate 13. However, the angular extent of rotation of second involute element 12 is limited by arcuate holes 114, since each pin 121 of second involute element 12 is penetrating each arcuate hole 114. As will be noted, the gap width can be also adjustable by rotation of working member 11 but within an angular extent limited by arcuate holes 114. Both working member 11 and second involute element 12 may be rotated but in opposite directions. The finishing, or broaching, operation of a preformed scroll by using the tool 10 will be explained below, referring to Fig. 8.

At a first step, the tool 10 is set on a support (not shown) by, for example, supporting shaft 113 so that axial end surfaces of involute elements 112 and 12 face, but spaced from, a working table 15.

A preformed scroll 14, which is formed by, such as a molding or a casting method, precisely and closely to the desired final dimensions and is subjected to finishing, is fixedly disposed on working table 15 so that the axial end of an involute wrap or spiral element 141 of preformed scroll 14 is placed near, and in registry with, the radial gap between the inner side wall of first involute element 112 formed with tooth 115 and the outer side wall of second involute element 12 formed with tooth 122.

After disposing preformed scroll 14, working table 15 and/or the supporting member of tool 10 is axially moved to push spiral element 141 into the radial gap between involute elements 112 and 12. At the time, the both side walls of spiral element 141 of preformed scroll 14 are cut or broached by teeth 115 and 122 of both involute elements 112 and 12. Working table 15 or tool 10 is, then, axially moved to separate from one another. Thereafter, adjusting plate 13 is moved toward the clockwise direction (direction is shown by arrow A in fig. 5) by a suitable rotating power source (not shown) to rotate second involute element 12 through pins 121 so that the radial gap between the both teeth is reduced. After rotating second involute element 12, working table 15 and/or tool 10 is again moved axially to approach one another. Both side walls of spiral element 141 are further more cut or broached by teeth 115 and 122. Therefore, both side walls of spiral element 141 are finished at a same time to have dimensional accuracy and uniformity. Furthermore, suitable thickness of spiral element will be obtained by adjusting the angular position of second involute element 12 in relation to first involute element 112.

## Claims

1. A manufacturing tool for broaching an involute wrap (141) of a preformed scroll to provide a finished scroll for use in a scroll type fluid displacement apparatus, characterized by a working member (11) which includes a first involute element (112) having a first tooth means (115) extending along an inner side surface of an axial end portion thereof, and an end plate (111) from one side surface of which said first involute element (112) extends, the end plate (111) being formed with a plurality of penetrating holes (114), a second involute element (12) which can be interfitted with said first involute element (112) to leave a radial gap therebetween, said second involute element (12) having a second tooth means (122) extending along an inner side surface of an axial end portion thereof so as to face said first tooth means (115) and a plurality of pins (121) projecting from the axial end surface thereof which, in use, faces said end plate (111), said pins (121) being, in use, loosely fitted in said holes (114) of said end plate (111), and an adjusting member (13) which is rotatably mounted on the other side surface of said end plate (111) and is fixedly connected to the axial end of said pins (121), thereby to enable adjustment of the width of the gap between said first and second involute elements (112, 12), into which gap said involute wrap (141) is urged so that both side surfaces thereof are finished by said teeth (115, 122).

2. A manufacturing tool as claimed in Claim 1, wherein said working member (11) includes a supporting member (113) affixed to the other side surface of said end plate (111), and said adjusting member (13) is rotatably fitted to said supporting member (113).

3. A manufacturing tool as claimed in Claim 1, wherein each of said holes (114) has an arcuate form and extends about the central axis of said first involute element (112).

4. A manufacturing tool as claimed in Claim 2, wherein said supporting member is a shaft (113) extending on the central axis of said first involute element (112), and said adjusting member (13) is rotatably mounted on said shaft (113).

## Patentansprüche

1. Fabrikationswerkzeug zum Ausreiben eines Evolvententeils (141) einer vorgeformten Spirale, um eine fertiggestellte Spirale zur Verwendung in einer Spiralfluidverdichtereinrichtung vorzusehen, gekennzeichnet, durch ein Werkstück (11) mit einem ersten Evolventenelement (112), das eine erste Zahneinrichtung (115), die sich entlang der inneren Oberfläche am axialen Ende desselben erstreckt, und eine Endplatte (111), von deren Oberfläche auf der einen Seite aus sich das erste Evolventenelement (112) erstrckt, aufweist, wobei die Endplatte (111) mit einer Mehrzahl von Durchgangsbohrungen (114) gebildet ist, einem zweiten Evolventenelement (12), das in das erste Evolventenelement (112) unten Einhaltung eines radialen Zwischenraums zwischen beiden eingepaßt werden kann, wobei das zweite Evolventenelement (12) eine zweite Zahneinrichtung (122), die sich entlang der inneren Oberfläche am axialen Ende desselben so erstreckt, daß sie der ersten Zahneinrichtung (115) gegenübersteht und eine Mehrzahl von Dornen (121) aufweist, die aus der axialen Endoberfläche desselben herausragen und im Betrieb der Endplatte (111) gegenüberstehen, wobei die Dorne (121) im Betrieb lose in die Bohrungen (114) der Endplatte (111) eingepaßt sind, und einer Einstelleinrichtung (13), die drehbar an der äußeren Oberfläche der Endplatte (111) befestigt ist und fest mit den axialen Enden der Dorne (121) verbunden ist, wodurch die Einstellung der Breite des Zwischenraums zwischen dem ersten und zweiten Evolventenelement (112, 12) ermöglicht wird, wobei das Evolvententeil (141) so in dem Zwischenraum angeordnet ist, daß die beiden Seitenoberflächen desselben durch die Zähne (115, 122) fertiggestellt werden.

2. Fabrikationswerkzeug nach Anspruch 1, dadurch gekennzeichnet, daß das Werkstück (11) ein Lagerteil (113) einschließt, das an der anderen Seitenoberfläche der Endplatte (111) befestigt ist, und die Einstelleinrichtung (13) drehbar in das Lagerteil (113) eingepaßt ist.

3. Fabrikationswerkzeug nach Anspruch 1, dadurch gekennzeichnet, daß die Bohrungen (114) präzise gebildet sind und sich um die Mittelachse des ersten Evolventenelements (112) herum erstrecken.

4. Fabrikationswerkzeug nach Anspruch 2, dadurch gekennzeichnet, daß das Lagerteil eine Welle (113) ist, die sich entlant der Mittelachse des ersten Evolventenelements (112) erstreckt, und die Einstelleinrichtung (13) drehbar an der Welle (113) befestigt ist.

**Revendications**

1. Outil de fabrication destiné à tailler un enroulement en spirale (141) d'une volute préformée, pour obtenir une volute terminée destinée à être utilisée dans un appareil de déplacement de fluide de type à volute, outil caractérisé en ce qu'il est utilisé un élément de travail (11) comprenant un premier élément de spirale (112) muni de premiers moyens de dent (115) suivant une surface latérale intérieure d'une partie d'extrémité axiale de celui-ci, et une plaque d'extrémité (111) sur une surface latérale de laquelle fait saillie le premier élément de spirale (112), la plaque d'extrémité (111) étant munie d'un certain nombre de trous de pénétration (114), un second élément de spirale (12) pouvant s'emboîter dans le premier élément de spirale (112) de manière à laisser un certain intervalle radial entre ces deux éléments, le second élément de spirale (12) comportant des seconds moyens de dent (122) suivant une surface latérale intérieure d'une partie d'extrémité axial de celuici, de manière à venir en face des premiers moyens de dent (115), et un certain nombre de tiges (121) faisant saillie sur sa surface d'extrémité axiale de manière à venir en face de la plaque d'extrémité (111) en cours d'utilisation, ces tiges (121) s'adaptant avec jeu, en cours d'utilisation, dans les trous (114) de la plaque d'extrémité (111), et un élément de réglage (13) monté en rotation sur l'autre face latérale de la plaque d'extrémité (111) et se reliant de façon fixe à l'extrémité axiale des tiges (121), de manière à permettre ainsi le réglage de la largeur de l'intervalle compris entre les premier et second élément de spirale (112, 12), l'enroulement de spirale (141) étant poussé dans cet intervalle de manière à subir un traitement de finition sur ses deux faces latérales, par les dents (115, 122).

2. Outil de fabrication selon la revendication 1, caractérisé en ce que l'élément de travail (11) comprend un élément de support (113) fixé à l'autre face latérale de la plaque d'extrémité (111), et en ce que l'élément de réglage (13) s'adapte en rotation sur l'élément de support (113).

3. Outil de fabrication selon la revendication 1, caractérisé en ce que chacun des trous (114) présente une forme courbe et vient autour de l'axe central du premier élément de spirale (112).

4. Outil de fabrication selon la revendication 2, caractérisé en ce que l'élément de support est un arbre (113) monté sur l'axe central du premier élément de spirale (112), et en ce que l'élément de réglage (13) est monté en rotation sur cet arbre (113).

FIG.1

FIG.2

FIG.3

FIG.4

FIG.7

FIG.5

FIG.6

FIG.8